Europäisches Patentamt

European Patent Office

Office européen des brevets

(19)

(11) Veröffentlichungsnummer: **0 190 713**
**B1**

(12) **EUROPÄISCHE PATENTSCHRIFT**

(45) Veröffentlichungstag der Patentschrift: **08.08.90**

(51) Int. Cl.⁵: **B 60 R 19/24**

(21) Anmeldenummer: **86101410.8**

(22) Anmeldetag: **04.02.86**

(54) Stossfänger für Kraftfahrzeuge, insbesondere für Personenkraftwagen.

(30) Priorität: **07.02.85 DE 3504060**

(43) Veröffentlichungstag der Anmeldung:
**13.08.86 Patentblatt 86/33**

(45) Bekanntmachung des Hinweises auf die
Patenterteilung:
**08.08.90 Patentblatt 90/32**

(84) Benannte Vertragsstaaten:
**DE FR GB IT**

(56) Entgegenhaltungen:
**EP-A-0 050 722**
**DE-A-2 702 691**
**FR-A- 575 418**
**FR-A-2 165 648**

(73) Patentinhaber: **Bayerische Motoren Werke
Aktiengesellschaft
Patentabteilung AJ-30 Postfach 40 02 40
Petuelring 130
D-8000 München 40 (DE)**

(72) Erfinder: **Wimmer, Rudolf
Edelweissstrasse 12
D-8061 Schwabhausen (DE)**

(74) Vertreter: **Dexheimer, Rolf
Bayerische Motoren Werke Aktiengesellschaft
Postfach 40 02 40 Petuelring 130 - AJ-21
D-8000 München 40 (DE)**

Courier Press, Leamington Spa, England.

**Beschreibung**

Die Erfindung bezieht sich auf einen Stoßfänger für Kraftfahrzeuge, insbesondere Personenkraftwagen der im Oberbegriff des Patentanspruchs 1 genannten und aus der DE-B-22 17 324 hervorgehenden Art.

Bei dem bekannten Stoßfänger sind die senkrecht verlaufenden Haltezapfen an einem schellenartig gestalteten Klemmring ausgebildet, der am Endabschnitt eines Stoßdämpfers durch Schrauben festgeklemmt ist. Dabei greifen die Haltezapfen jeweils in eine elastische Schicht ein, welche sich zwischen einer fest mit dem Stoßfänger verbundenen Wand und einem mit dieser verschraubten Klemmteil befindet. Die jeweiligen Schraubverbindungen müssen jedoch manuell vorgesehen werden, was verhältnismäßig zeitaufwendig ist und nicht automatisiert werden kann.

Aufgabe der Erfindung ist es daher, die Befestigung eines Stoßfängers an Stoßdämpfern gemäß dem Oberbegriff des Patentanspruchs 1 mit einfachen Mitteln derart auszubilden, daß der Stoßfänger unter Verzicht auf speziell vorzusehende Verbindungsmittel wie Schrauben oder dergleichen, nämlich durch ein bloßes Aufschieben, mit den Stoßdämpfern verbindbar ist.

Zur Lösung der Aufgabe sind die in kennzeichnenden Teil des Patentanspruchs 1 dargelegten Merkmale vorgesehen.

Durch die erfindungsgemäße längsverschiebbare Lagerung wenigstens eines Haltezapfens, der in Einbaulage des Stoßfängers federbelastet gegen diesen wirkt, braucht der Stoßfänger bei entsprechender Bemessung und Gestaltung der zu fügenden Teile praktisch nur gegen die Stirnseiten der Stoßdämpfer gedrückt zu werden, wobei schließlich die Haltezapfen in die zugeordneten Lageraugen einrasten; damit ist der Stoßfänger an den Stoßdämpfern befestigt. Ein solcher Montagevorgang kann vorteilhafterweise sehr rationell und auch von einem Handhabungsautomaten durchgeführt werden.

Das einfache Montieren des Stoßfängers wird noch dadurch gefördert, daß beide Haltezapfen längsverschiebbar angeordnet sind (Merkmal des Patentanspruchs 2), wobei eine am Stoßfänger vorgesehene U-förmige Halterung mit divergierend verlaufenden Schenkeln (Merkmale der Patentansprüche 7 und 8) darüber hinaus zu einem raschen und selbstzentrierenden Anordnen des Stoßfängers an den Stoßdämpfern beiträgt.

Die Haltezapfen können jeweils an einem Gleitteil ausgebildet sein, welche sich in einer senkrechten Aufnahmehülse befinden und durch eine Druckfeder voneinander weg verlagert werden (Merkmale des Patentanspruchs 3). Eine von der außenliegenden Stirnseite des Gleitteils zum Haltezapfen verlaufende Zentrierschräge (Merkmal des Patentanspruchs 5) gewährleistet auch bei unterschiedlich großem Lagerauge ein paßgenaues Aufnehmen des Stoßfängers.

Weitere Ausgestaltungen der Erfindung sind in anderen Unteransprüchen gekennzeichnet.

Ein Ausführungsbeispiel der Erfindung ist in der Zeichnung dargestellt und wird im folgenden erläutert. Es zeigt:

Fig. 1 eine Draufsicht auf einen erfindungsgemäßen Stoßfänger,

Fig. 2 einen um 90° gedrehten Schnitt längs der Linie II-II in Fig. 1 in größerer Darstellung.

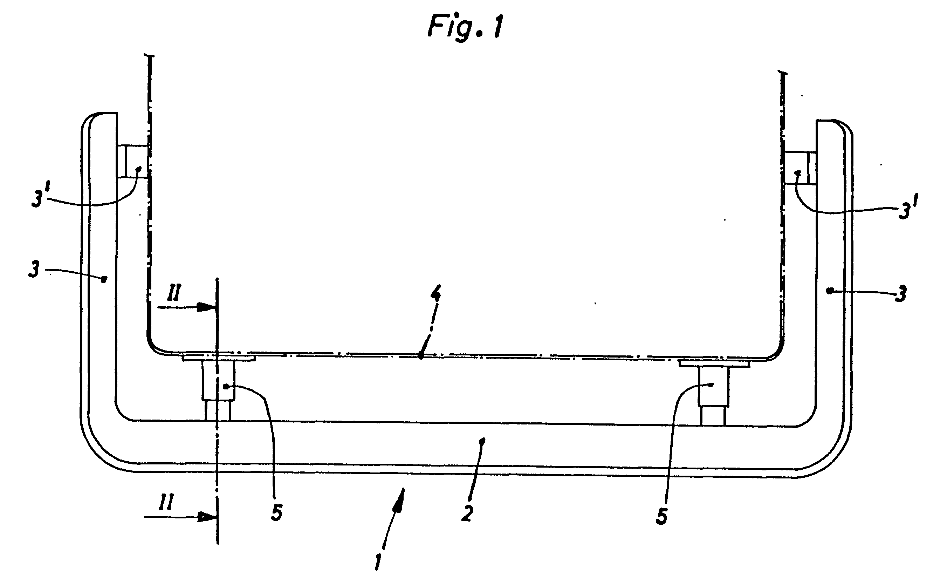

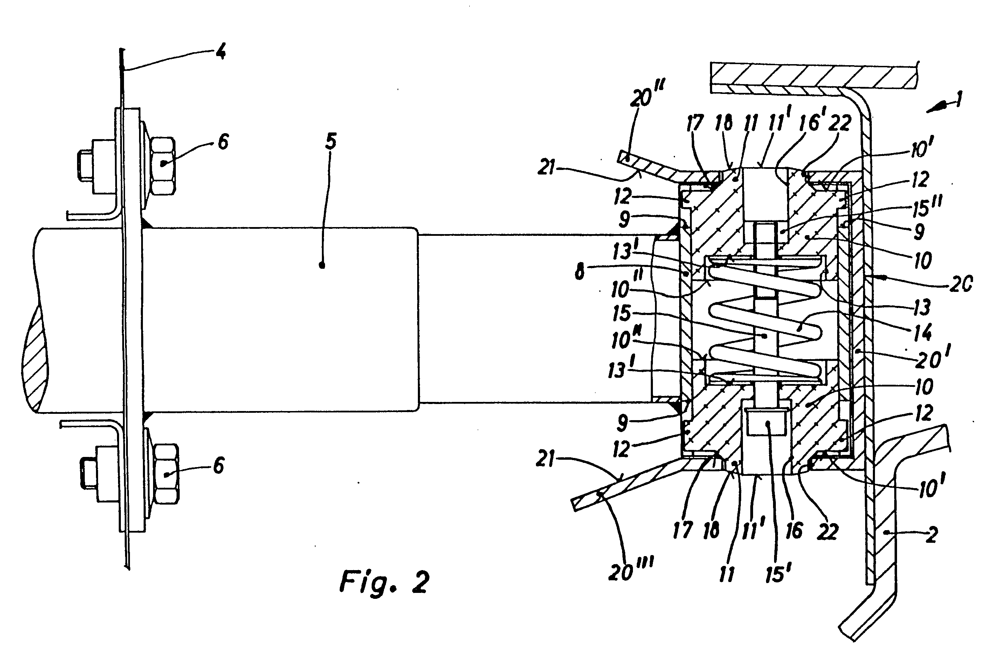

Der in den Fig. 1 und 2 dargestellte Stoßfänger 1 besteht aus einem Mittelteil 2 und zwei sich einstückig an dieses anschließenden seitlichen Endteilen 3, wobei das Mittelteil 2 von zwei am Bug- und/oder Heckbereich eines Personenkraftwagens, dessen Fahrzeugaufbau mit 4 bezeichnet ist, angebrachten hydraulischen Stoßdämpfern 5 getragen wird. Diese werden ihrerseits am Fahrzeugaufbau 4 — und zwar vor Anbringung des Stoßfängers 1 — durch Schrauben 6 entsprechend einem vorgegebenen Höhenmaß befestigt; damit dieses exakt eingehalten werden kann, können die Stoßdämpfer 5 an ihrer Befestigungsstelle auch geringfügig höhenmäßig versetzt werden.

Am freien Ende eines jeden Stoßdämpfers 5 ist eine quer zu seiner Längsachse und senkrecht verlaufende Aufnahmehülse 8 mit kreisförmigem Querschnitt angeschweißt, an deren Endabschnitten jeweils diametral gegenüberliegende und in einer gemeinsamen Ebene liegende Längsschlitze 9 ausgebildet sind. Die beiden Enden der Aufnahmehülse 8 ragen dabei über den Außenumfang des Stoßdämpfers 5 hinaus, während die Längsschlitze 9 sich bis etwa zu dessen Außenumfang erstrecken. Ferner befindet sich an den beiden Endbereichen der Aufnahmehülse 8 jeweils ein längsverschiebbar in diese eingesetztes, obenliegendes und untenliegendes Gleitteil 10, von deren außenliegenden Stirnseiten 10' jeweils ein zentrisch angeordneter Haltezapfen 11 absteht. Die aus Kunststoff bestehende Gleitteile 10 haben jeweils im Bereich ihrer außenliegenden Stirnseiten 10' zwei von ihrem Außenumfang abstehende und diametral gegenüberliegende Nasen 12, welche in jeweils einen Längsschlitz 9 der Aufnahmehülse 8 eingreifen, wodurch die Gleitteile 10 in dieser längsverschiebbar, jedoch drehgesichert angeordnet sind. Ferner haben die Gleitteile 10 an ihren innenliegenden, einander zugewandten Stirnseiten 10'' jeweils eine zentrische Ausnehmung 13, an deren Boden 13' eine zwischen den beiden Gleitteilen 10 angeordnete Druckfeder 14 mit Vorspannung anliegt. Die beiden Gleitteile 10 und die Druckfeder 14 sind mittig von einer Schraube 15 durchdrungen, deren Kopf 15' sich in einer Ausnehmung 16 des untenliegenden Gleitteils 10 befindet, während in einer Ausnehmung 16' des obenliegenden Gleitteils 10 eine Mutter 15'' der Schraube 15 drehfest eingesetzt ist; dabei ist die Schraube 15 in den Durchgangsbohrungen der beiden Gleitteile 10 drehbar angeordnet. Die Gleitteile 10 werden somit durch die zwischen ihnen liegende Druckfeder 14 voneinander weg verlagert, wobei sie in ihrer Endlage jedoch von der Schraube 15 gehalten werden. Wie in Fig. 2 ersichtlich, ragen die an den Gleitteilen 10 ausgebildeten Haltezapfen 11 in ihrer mit dem Stoßfänger 1 zusammenwirkenden Endlage — wie im folgenden erläutert wird — über die Stirnseiten der Aufnahmehülse 8 hinaus, während demgegenüber die Gleitteile 10 gegen die Wirkung der Druckfeder 14 soweit zueinander hin verlagerbar sind, daß die Stirnseiten 11' der Haltezapfen 11 jeweils etwa auf Höhe der Stirnseiten der Aufnahmehülse 8 liegen.

In Fig. 2 ist ferner zu ersehen, daß am Übergangsbereich von der außenliegenden Stirnseite 10' eines jeden Gleitteils 10 zum Haltezapfen 11 eine umlaufende Zentrierschräge 17 von etwa 45° ausgebildet ist. Durch diese ist gewährleistet, daß der Stoßfänger 1 auch dann starr von den Haltezapfen 11 und damit von den Stoßdämpfern 5 aufgenommen wird, wenn der Durchmesser der Lageraugen 22 am Stoßfänger 1 geringfügig unterschiedlich groß ist. Schließlich ist an der Stirnseite 11' eines jeden Haltezapfens 11 eine zur außenliegenden Stirnseite 10' des Gleitteils 10 hin verlaufende Abschrägung 18, Krümmung oder dergleichen vorgesehen. Die Abschrägung 18 gewährleistet ein sicheres und zuverlässiges Einrasten des Haltezapfens 11 in das Lagerauge 22 des Stoßfängers 1.

Wie Fig. 2 schließlich zeigt, hat das Mittelteil 2 des Stoßfängers 1 an seiner den Stoßdämpfern 5 zugewandten Innenseite eine im Bereich der Stoßdämpfer 5 liegende und zu diesen hin offene U-förmige Halterung 20. Deren Steg 20' verläuft senkrecht und liegt bei an den Stoßdämpfern 5 angebrachtem Stoßfänger 1 nahe am Außenmantel der Aufnahmehülse 8. Von der Aufnahmehülse 8 weg verlaufen der obenliegende Schenkel 20'' und der untenliegende Schenkel 20''' der U-förmigen Halterung 20 symmetrisch divierierend und bilden damit in einfacher Weise mit ihrer Innenseite eine zur Aufnahmehülse 8 hin gerichtete Einführschräge 21. Im rückwärtigen, im Bereich der Aufnahmehülse 8 liegenden Abschnitt des obenliegenden Schenkels 20'' und des untenliegenden Schenkels 20''' sind jeweils miteinander fluchtende Lageraugen 22 ausgebildet. In diese greifen bei montiertem Stoßfänger 1 die Haltezapfen 11 mit Radialspiel ein. Die Längserstreckung der Aufnahmehülse 8 ist etwas kleiner als der Abstand zwischen den rückwärtigen, rechtwinklig zum Steg 20' der U-förmigen Halterung 20 verlaufenden Abschnitte der Schenkel 20'', 20''', so daß die Aufnahmehülse 8 problemlos zwischen den Abschnitten angeordnet werden kann.

Der Stoßfänger 1 wird wie folgt an die Stoßdämpfer 5 montiert bzw. von diesen demontiert:

Wenn jeweils zwei Gleitteile 10 in die Aufnahmehülsen 8 der beiden Stoßdämpfer 5 eingesetzt und über die Schrauben 15 verbunden sind, liegen die Nasen 12 der oberen Gleitteile 10 jeweils durch das Eigengewicht beider Gleitteile 10 am Grund der Längsschlitze 9 auf, so daß die Haltezapfen 11 der unteren Gleitteile 10 relativ weit über die unteren Stirnseiten der Aufnahmehülsen 8 hinausragen, während sich die Nasen 12 der untenliegenden Gleitteile 10 jedoch noch in den untenliegenden Längsschlitzen 9 befinden.

Nunmehr braucht lediglich der Stoßfänger 1 mit seinem Mittelteil 2 zu den Stoßdämpfern 5 hingeschoben zu werden, wobei die Fixierung des Stoßfängers 1 in Fahrzeugquerrichtung und damit eine in dieser Richtung zumindest angenäherte Positionierung der Lageraugen 22 in Bezug zu den Haltezapfen 11 durch die seitlichen Halteelemente 3' erfolgt, welche mit den Endteilen 3 des Stoßfängers 1 zusammenwirken. Bei dem erwähnten Vorgang gleitet die Einführschräge 21 des untenliegenden Schenkels 20''' der U-förmigen Halterung 20 über die Stirnseiten 11' der untenliegenden Haltezapfen 11, wodurch die untenliegenden Gleitteile 10 infolge der schrägverlaufenden Einführschräge 21 stetig nach oben verlagert werden, bis schließlich das obenliegende und das untenliegende Gleitteil 10 symmetrisch, also mit jeweils gleichgroßem Abstand zur Mittelachse des Stoßdämpfers 5 im Bereich der Abwinkelungen am obenliegenden Schenkel 20'' und am untenliegenden Schenkel 20''' anliegt. Durch ein weiteres Verlagern des Mittelteils 2 des Stoßfängers 1 zu den Stoßdämpfern 5 hin werden die obenliegenden und untenliegenden Gleitteile 10 gegen die Wirkung der Druckfedern 14 in stets gleichgroßem Maß soweit zueinander hin verlagert, bis sie an den Innenseiten der rückwärtigen, rechtwinklig zum Steg 20' verlaufenden Abschnitte der U-förmigen Halterung 20 federbelastet anliegen; wenn schließlich bei weiterem Verlagern des Stoßfängers 1 die Lageraugen 22 fluchtend zu den Haltezapfen 11 liegen, so rasten diese durch die Wirkung der die beiden Gleitteile 10 voneinander weg verlagernden Druckfeder 14 in die Lageraugen 22 ein, wodurch der Stoßfänger 1 starr mit den Stoßdämpfern 5 verbunden ist. Die an den Haltezapfen 11 vorgesehenen Zentrierschrägen 17 gewährleisten unabhängig von Fertigungstoleranzen ein exaktes Zentrieren von Haltezapfen 11 und Lageraugen 22; dabei werden auch die Haltezapfen 11 über die Zentrierschrägen 17 gegen die innenliegenden Eckkanten der Lageraugen 22 gepreßt, so daß stets eine starre, rüttelsichere Verbindung von Stoßfänger 1 und Stoßdämpfern 5 besteht. Damit die Zentrierschrägen 17 stets federbelastet an den Schenkeln 20'' und 20''' anliegen, ist zwischen dem Schraubenkopf 15' und dem zugewandten Grund der Ausnehmung 16 ein axiales Spiel vorgesehen.

Wenn der Stoßfänger 1 von den Stoßdämpfern 5 enfernt werden soll, werden die Gleitteile 10 über die Schrauben 15 soweit zueinander hin verlagert, bis die Stirnseiten 11' der Haltezapfen 11 etwa auf Höhe der Innenseiten der rückwärtigen, rechtwinklig zum Steg 20' verlaufenden Abschnitte der U-förmigen Halterung 20 liegen und dadurch der Stoßfänger 1 von den Stoßdämpfern 5 abgezogen werden kann.

**Patentansprüche**

1. Stoßfänger (1) für Kraftfahrzeuge, insbesondere Personenkraftwagen, mit einer Einrichtung für seine Befestigung an mindestens zwei, am Fahrzeugaufbau angebrachten Stoßdämpfern (5), wobei die Einrichtung im wesentlichen aus zwei, sich am Endabschnitt eines jeden Stoßdämpfers (5) befindenden sowie quer zu dessen Längsachse verlaufenden Haltezapfen (11) und diese jeweils aufnehmenden Lageraugen (22) besteht, welche im Stoßfänger (1) vorgesehen sind, dadurch gekennzeichnet, daß wenigstens ein Haltezapfen (11) gegen Federwirkung längsverschiebbar ist.

2. Stoßfänger nach Anspruch 1, dadurch gekennzeichnet, daß beide Haltezapfen (11) am Stoßdämpfer (5) in einer Aufnahme (Aufnahmehülse 8) gelagert sind und bei montiertem Stoßfänger (1) in dessen Lageraugen (22) einrasten.

3. Stoßfänger nach Anspruch 2, wobei die Haltezapfen etwa senkrecht verlaufen und mit ihren freien Enden jeweils über den Stoßdämpfer hinausragen, gekennzeichnet durch eine am freien Ende des Stoßdämpfers (5) senkrecht befestigte Aufnahmehülse (8) mit kreisförmigem Querschnitt, welche an ihren beiden Endbereichen jeweils ein längsverschiebbar, jedoch drehgesichert angeordnetes Gleitteil (10) trägt, wobei von der außenliegenden Stirnseite (10') eines jeden Gleitteils der in Wirklage über die Aufnahmehülse hinausragende Haltezapfen (11) absteht, während die Gleitteile durch eine an ihren einander zugewandten Stirnseiten (10'') anliegende, vorgespannte Druckfeder (14) voneinander weg verlagert, in ihrer Endlage jedoch durch eine sie und die Druckfeder durchringende Schraube (15) gehalten werden.

4. Stoßfänger nach Anspruch 3, gekennzeichnet durch wenigstens eine, vom Außenumfang eines jeden Gleitteils (10) abstehende Nase (12), welche jeweils in einen an den Endabschnitten der Aufnahmehülse (8) ausgebildeten Längsschlitz (9) eingreift.

5. Stoßfänger nach Anspruch 3, dadurch gekennzeichnet, daß am Übergangsbereich von der außenliegenden Stirnseite (10') des Gleitteils (10) zum Haltezapfen (11) eine umlaufende Zentrierschräge (17) von etwa 45° ausgebildet ist.

6. Stoßfänger nach Anspruch 3, dadurch gekennzeichnet, daß an der Stirnseite (11') des Haltezapfens (11) eine zur außenliegenden Stirnseite (10') des Gleitteils (10) hin verlaufende Abschrägung (18) oder Krümmung vorgesehen ist.

7. Stoßfänger nach Anspruch 1 oder 2, dadurch gekennzeichnet, daß das Mittelteil (2) des Stoßfängers (1) an seiner dem Stoßdämpfer (5) zugewandten Innenseite eine wenigstens in dessen Bereich liegende und zu diesem hin offene U-förmige Halterung (20) hat, deren senkrecht verlaufender Steg (20') nahe am Außenmantel der Aufnahmehülse (8) liegt.

8. Stoßfänger nach Anspruch 7, dadurch gekennzeichnet, daß der obenliegende (20'') und der untenliegende Schenkel (20''') der U-förmigen Halterung (20) von der Aufnahmehülse (8) weg symmetrisch divergierend verlaufen und sie damit eine zu dieser hin gerichtete Einführschräge (21) bilden, wobei in den rückwärtigen, im Bereich der Aufnahmehülse liegenden Abschnitten der Schenkel (20'', 20''') die die Haltezapfen (11) aufnehmende Lageraugen (22) ausgebildet sind, welche miteinander fluchten.

## Revendications

1. Pare-chocs (1) pour véhicules à moteur, en particulier pour automobiles, comprenant un dispositif pour sa fixation sur au moins deux amortisseurs (5), montés sur la carrosserie du véhicule, lequel dispositif, est pour l'essentiel constitué par deux tenons de maintien (11) se trouvant à la partie d'extrémité de chaque amortisseur (5) et, par ailleurs, par des oeillets d'appui (22) dans lesquels se logent respectivement ces derniers et qui sont prévus dans le pare-chocs, caractérisé en ce qu'au moins un tenon (11) est déplaçable longitudinalement en surmontant l'action d'un ressort.

2. Pare-chocs selon la revendication 1, caractérisé en ce que les deux tenons (11) sont montés sur l'amortisseur (5) dans un logement (manchon de réception 8), et le pare-chocs (11) étant monté, s'encliquètent dans les oeillets d'appui (22) de celui-ci.

3. Pare-chocs selon la revendication 2, sur lequel les tenons s'étendent à peu près verticalement et font respectivement saillie par leurs extrémités libres au-delà du pare-chocs, caractérisé par un manchon de réception (8) fixé verticalement sur l'extrémité libre de l'amortisseur (5) et pourvu d'une section circulaire, qui porte en chacune de ses deux régions d'extrémité un élément coulissant (10), mobile longitudinalement, mais assuré contre la rotation et en ce que le tenon (11) faisant saillie en dehors du manchon en positions actives s'écarte de la face frontale située à l'extérieur (16) de chaque élément coulissant, tandis que les éléments coulissants sont écartés l'un de l'autre par un ressort de pression (14) précontraint s'appuyant sur leurs faces frontales situées en regard (10''), mais sont maintenus dans leur position extrême par une vis (15) traversant le ressort de pression.

4. Pare-chocs selon la revendication 3, caractérisé par au moins un talon (12) s'écartant du pourtour extérieur de chaque élément coulissant (10) qui s'engage dans une fente longitudinale (9) constituée sur les parties d'extrémité du manchon (8).

5. Pare-chocs selon la revendication 3, caractérisé en ce qu'un profil de centrage incliné à 45° est constitué sur le pourtour de la zone de transition entre la face frontale extérieure (10') de l'élément coulissant (10) et le tenon de maintien (11).

6. Pare-chocs selon la revendication 3, caractérisé en ce qu'il est prévu, sur la face frontale (11') du tenon (11), un biseau (18) ou une courbure s'étendant vers la face frontale (10') extérieure de l'élément de glissement.

7. Pare-chocs selon la revendication 1 ou 2, caractérisé en ce que la partie centrale (2) du pare-chocs (1) a, sur sa face intérieure tournée vers l'amortisseur (5), au moins une fixation en forme d'U (20) située dans sa zone et ouverte vers celui-ci, dont la traverse (20') s'étendant verticalement est proche de l'enveloppe extérieure du manchon (8).

8. Pare-chocs selon la revendication 7, caractérisé en ce que la branche supérieure (20'') et la branche inférieure (20''') de la fixation (20) en forme d'U s'étendent symétriquement hors du manchon (8) en divergeant et constituent un profil incliné d'introduction (21) dirigé vers celui-ci, tandis que sont constitués dans les parties arrière des branches (20'', 20''') situées dans la zone du manchon, les oeillets d'appui (22) qui supportent les tenons, avec lesquels ils sont alignés.

## Claims

1. A bumper (1) for motor vehicles, more particularly passenger cars, comprising a device for securing it to at least two shock-absorbers (5) secured to the car body, the device substantially comprising two retaining pins (11) at the end of each shock-absorber (5) and extending transversely to the longitudinal axis thereof, and eyelets (22) receiving respective retaining pins and provided in the bumpers (1), characterised in that at least one retaining pin (11) is longitudinally movable against the action of a spring.

2. A bumper according to claim 1, characterised in that the two retaining pins (11) on the shock-absorber (5) are mounted in a holder (sleeve 8) and engage in the eyelets (22) when the bumper (1) is fitted.

3. A bumper according to claim 2, in which the retaining pins extend approximately vertically and their free ends project above the bumpers, characterised by a sleeve (8) having a circular cross-section and secured vertically to the free end of the shock-absorber (5), each end region of the sleeve carrying a longitudinally movable but non-rotatable sliding part (10), and the retaining-pin (11), which in the operative position projects beyond the sleeve, projects from the outer end face (10') of each sliding part, whereas the sliding parts are moved away from one another by a pretensioned compression spring (14) abutting their facing end faces (10'') but are held in their end position by a screw (15) which extends through them and through the compression spring.

4. A bumper according to claim 3, characterised by at least one lug (12) projecting from the outer periphery of each sliding part (10), each lug engaging in a longitudinal slot (9) formed on the end portions of the sleeve (8).

5. A bumper according to claim 3, characterised in that a peripheral centering slope (17) of about 45° is formed on the transition region from the outer end face (10') of the sliding part (10) to the retaining pin (11).

6. A bumper according to claim 3, characterised in that a slope (18) or curve extending towards the outer end face (10') of the sliding part (10) is formed on the end face (11') of the retaining pin (11).

7. A bumper according to according to claim 1 or 2, characterised in that the middle part (2) of the bumper (1), on its inner side facing the shock-absorber (5), has a U-shaped holder (20) which is disposed at least in the shock-absorber region and is open towards the shock-absorber and has a vertical web (20') situated near the outer surface of the sleeve (8).

8. A bumper according to claim 7, characterised in that the upper arm (20'') and the lower arm (20''') of the U-shaped holder (20) diverge symmetrically away from the sleeve (8) and thus form an insertion slope (21) extending towards the sleeve, and the eyelets (22) holding the retaining pin (11) and flush with one another are formed in the rear portions of the arms (20'', 20''') which are situated near the sleeve.

*Fig.1*

3'

3

5

4

2

1

5

II

II

3'

3

Fig. 2